# EUROPÄISCHE PATENTANMELDUNG

(11) **EP 1 278 297 A2**
(43) Veröffentlichungstag der Anmeldung: **22.01.2003**
(21) Anmeldenummer: 02016019.8
(22) Anmeldetag: 18.07.2002
(51) Int. Cl.: H02M 7/06

(54) **Stromversorgungseinrichtung mit Kleinspannungen für Systeme sowohl für den Einsatz in ein- als auch in mehrphasennetzen**

(30) Priorität: 20.07.2001 DE 10136942; 20.07.2001 DE 20112487 U
(71) Anmelder: ENSECO GmbH, 81379 München (DE)
(72) Erfinder: Meyer, Gerhard, Dr.-Ing., 16356 Eiche (DE)
(74) Vertreter: Jacoby, Georg

(57) **Zusammenfassung**

Die Erfindung betrifft Stromversorgungseinrichtungen mit Kleinspannungen für Systeme sowohl für den Einsatz in Ein- als auch in Mehrphasennetzen.

Diese zeichnen sich insbesondere dadurch aus, dass eine strombegrenzende Einrichtung zwischen der mindestens einen Phase und dem Nullleiter zu einem durch die strombegrenzende Einrichtung festgelegten elektrischen Stromfluss im damit vorhandenen Stromkreis gebildet aus der Phase, der Leitung zur strombegrenzenden Einrichtung, der strombegrenzenden Einrichtung, der Leitung zum Nullleiter und dem Nullleiter führt. Über die Widerstände der Leitungen oder elektrischen Widerständen in den Leitungen ist jeweils ein Spannungsabfall vorhanden, der vorteilhafterweise jeweils einzeln als Spannungsquelle oder zusammen als Spannungsquellen für Stromversorgungseinrichtungen dient oder dienen Dazu befinden sich zwei Abgriffe an der elektrischen Leitung oder den elektrischen Widerständen, an denen die Spannung anliegt.

## Beschreibung

Die Erfindung betrifft Stromversorgungseinrichtungen mit Kleinspannungen für Systeme sowohl für den Einsatz in Ein- als auch in Mehrphasennetzen.

Stromversorgungseinrichtungen sind im allgemeinen als Netzgeräte bekannt. Diese entnehmen dem öffentlichen Niederspannungsnetz Energie.
Die meisten Netzgeräte enthalten neben Gleichrichtern, Siebmitteln und Baugruppen zur Stabilisierung einen oder mehrere Netztransformatoren zur Spannungsformung und zur galvanischen Trennung der Ausgänge vom Netz. Da diese Volumen und Masse des Netzgerätes weitgehend bestimmen, steigt mit zunehmender Miniaturisierung der angeschlossenen Verbraucher trotz zurückgegangenen Leistungsbedarfs der Anteil der Netzgeräte insbesondere bei kompakten elektronischen Einrichtungen immer weiter an.
Dieses Verhältnis ist bei transformatorlosen Netzgeräten besser, da Volumen und Masse wesentlich reduziert sind. Bei einer ersten Variante von bekannten transformatorlosen Netzgeräten wird die Netzspannung direkt gleichgerichtet, gesiebt und dann in einem meist geregelten Gleichspannungswandler auf die geforderte Gleichspannungswerte umgesetzt. Diese Variante setzt Gleichrichter hoher Spannungsfestigkeit voraus. Bei einer zweiter Variante wird der Spannungsabfall über eine Stromquelle in Form eines Kondensators zwischen einer Phase und dem Nullleiter gleichgerichtet, gesiebt und eventuell stabilisiert.

Der in dem Patentanspruch 1 angegebenen Erfindung liegt das Problem zugrunde, eine einfach zu realisierende und räumlich kleine Stromversorgungseinrichtung für Einrichtungen sowohl für den Einsatz in Einphasennetzen als auch in Mehrphasennetzen zu schaffen.

Dieses Problem wird mit den im Patentanspruch 1 aufgeführten Merkmalen gelöst.

Die erfindungsgemäße Stromversorgungseinrichtung zeichnet sich insbesondere dadurch aus, dass eine strombegrenzende Einrichtung zwischen der mindestens einen Phase und dem Nullleiter zu einem durch die strombegrenzende Einrichtung festgelegten elektrischen Stromfluss im damit vorhandenen Stromkreis gebildet aus der Phase, der Leitung zur strombegrenzenden Einrichtung, der strombegrenzenden Einrichtung, der Leitung zum Nullleiter und dem Nullleiter führt. Über die Widerstände der Leitungen oder elektrischen Widerständen in den Leitungen ist jeweils ein Spannungsabfall vorhanden, der vorteilhafterweise jeweils einzeln als Spannungsquelle oder zusammen als Spannungsquellen für Stromversorgungseinrichtungen dient oder dienen. Dazu befinden sich zwei Abgriffe an der elektrischen Leitung oder den elektrischen Widerständen, an denen die Spannung anliegt. In einer weiteren Ausführungsform ist zwischen der strombegrenzenden Einrichtung und der Phase und/oder dem Nullleiter eine spannungsbegrenzende Gleichrichterschaltung geschalten.
Damit können zwei symmetrische Gleichspannungen erzeugt werden, wobei die erste Gleichspannung auf Nullleiter und die zweite Gleichspannung auf Phase bezogen ist.
Vorteilhafterweise sind die erste Gleichspannung nach Siebung und Stabilisierung eine Versorgungsspannung für eine Messeinrichtung und die zweite Gleichspannung nach Siebung und Stabilisierung eine Versorgungsspannung für eine Steuereinrichtung oder Steuer- und Verarbeitungseinrichtung. In einer Ausführungsform kann die erste Gleichspannung zur Versorgungsspannung für die Steuereinrichtung oder Steuer- und Verarbeitungseinrichtung und die Zweite für die Messeinrichtung.
Die erfindungsgemäße Stromversorgungseinrichtung kann vorteilhafterweise in Mehrphasensystemen eingesetzt werden, wobei eine konjunktive Verknüpfung der auf Nullleiterbezug liegenden Versorgungsspannung besonders geeignet ist, eine Steuereinrichtung oder eine Steuer- und Verarbeitungseinrichtung zu versorgen, auch wenn Phasenausfall vorliegt. Damit ergibt sich der Vorteil, dass bei Vorhandensein nur einer Phase trotzdem eine Stromversorgung gewährleistbar ist.
Vorteilhafte Ausgestaltungen der Erfindung sind in den Patentansprüchen 2 bis 7 angegeben.

Ein Gleichspannungswandler nach der Gleichrichterschaltung nach der Weiterbildung des Patentanspruchs 2 ermöglicht eine Verringerung des Widerstandsoperators der strombegrenzenden Einrichtung, da eine höhere Spannung bei geringerem Strom zu einer gleichen Leistungsbilanz führt, wie diese durch eine niedrige Spannung bei einem höheren Strom gegeben ist.

Ein elektrischer Widerstand als Widerstandskörper mit Abgriffen in der elektrischen Leitung nach der Weiterbildung des Patentanspruchs 3 gewährleistet einen größeren Spannungsabfall gegenüber dem elektrischen Widerstand der Leitung selbst. Der elektrische Widerstand ist vorteilhafterweise ein niederohmiger Widerstand, so dass auch bei großen fließenden elektrischen Strömen eine leicht abführbare Wärmeenergie vorhanden ist.

Ein Widerstandselement in Stromrichtung nach der strombegrenzenden Einrichtung und vor dem elektrischen Widerstand nach der Weiterbildung des Patentanspruchs 4 stellt eine Stromquelle dar. Dadurch wird dieser Stromkreis wesentlich stabilisiert.

Ein Varistor zwischen der Phase oder den Phasen und dem Nullleiter nach der Weiterbildung des Patentanspruchs 5 dient durch seine nichtlineare Kennlinie der Unterdrückung von Störspannungen.

Eine Stabilisierungsschaltung nach der Gleichrichterschaltung nach der Weiterbildung des Patentanspruchs 6 unterdrückt weitestgehend Spannungs- oder Stromschwankungen, so dass ein stabiler Betrieb gewährleistet wird. Daraus resultierende Messfehler werden weitestgehend vermieden.

Mit einem Kondensator als strombegrenzende Einrichtung nach der Weiterbildung des Patentanspruchs 7 ist ein Kondensatornetzteil realisiert, das ein transformatorloses Netzteil ist, und ein sehr geringes Bauvolumen besitzt. Neben dem geringen Bauvolumen weist es einen einfachen und mit wenigen Bauelementen realisierbaren Aufbau aus, so dass ein sehr ökonomischer Aufbau gegeben ist. Der Kondensator ist im Wechselstromkreis ein Widerstandsoperator. Das beruht darauf, dass der Strom gegenüber der Spannung bei sinusförmig veränderlicher Spannung um eine viertel Periodendauer voreilt, wobei der Widerstandsoperator des Kondensators mit wachsender Frequenz abnimmt.

Ausführungsbeispiele der Erfindung sind in den Zeichnungen dargestellt und werden im folgenden näher beschrieben.
Es zeigen:
- Fig. 1: eine Stromversorgungseinrichtung mit Kleinspannungen für Systeme in Ein- und Mehrphasennetzen,
- Fig. 2: eine Stromversorgungseinrichtung mit Kleinspannungen mit einem Gleichspannungswandler für Systeme in Ein- und Mehrphasennetzen,
- Fig. 3: eine Stromversorgungseinrichtung mit Kleinspannungen mit einem zusätzlichen Widerstandselement,
- Fig. 4: eine Stromversorgungseinrichtung mit Kleinspannungen für Systeme in Einphaserinetzen und
- Fig. 5: eine Stromversorgungseinrichtung mit Kleinspannungen für Systeme in Mehrphasennetzen.

### 1. Ausführungsbeispiel

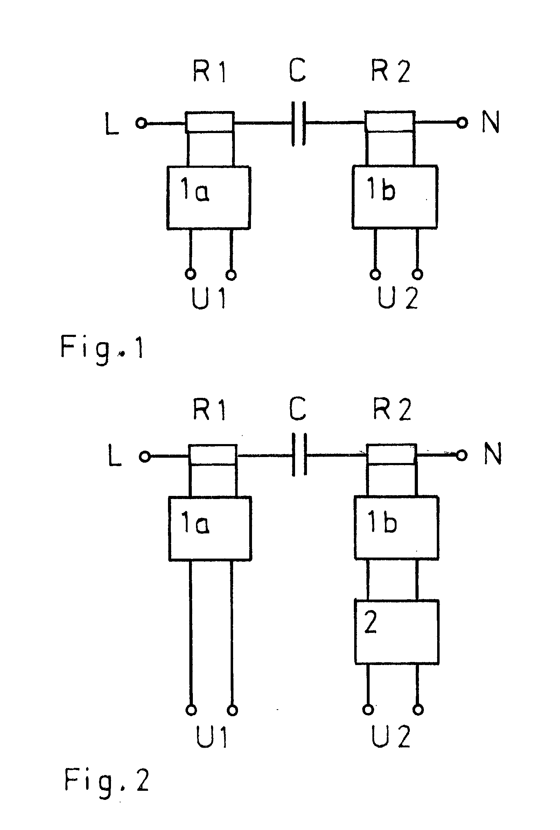

Eine Stromversorgungseinrichtung mit Kleinspannungen für Systeme in Mehrphasennetzen besteht in einem ersten Ausführungsbeispiel aus einem Kondensator C als strombegrenzende Einrichtung zwischen der Phase L und dem Nullleiter N und Gleichrichterschaltungen 1a, 1b zwischen der einen Spannungsabfall verursachenden Widerständen R1, R2 in der Zuleitung und Ableitung des Kondensators C. Diese Widerstände R1 und R2 können sowohl die Zuleitung und die Ableitung als auch Widerstandskörper oder eine Kombination daraus sein. In einer Ausführungsform kann eine Stabilisierungsschaltung mit Siebmitteln einer oder den Gleichrichterschaltungen 1a, 1b nachgeschaltet sein. Ein System ist dabei z.B. ein elektronischer Energiezähler. In der Fig. 1 ist eine derartig realisierte Stromversorgungseinrichtung prinzipiell dargestellt.

Der Kondensator C ist im Wechselstromkreis ein Widerstandsoperator. In den Widerständen R1, R2 zwischen zum Einen der Phase L und dem Kondensator C und zum Anderen dem Kondensator C und dem Nullleiter N wird eine Wirkleistung verrichtet. Dabei fällt an den Widerständen R1, R2 als passiver Zweipol jeweils eine Spannung ab, da durch diesen passiven Zweipol der Strom im gleichen Zählsinn fließt. Die Widerstände R1, R2 besitzen zwei Abgriffe als jeweils erster und zweiter Abgriff, an denen dieser Spannungsabfall anliegt. Diese Spannungen werden nachfolgend gleichgerichtet, so dass diese als Betriebsspannungen mit unterschiedlichem Potenzial für die Bestandteile des elektronischen Energiezählers nutzbar sind. Die Potenziale sind dabei zum Einen die Phase L und zum Anderen der Nullleiter N. Die Ausgangsspannungen U1, U2 der Gleichrichterschaltungen 1a, 1b können in Ausführungsformen weiterhin über Siebmittel und stabilisierende Einrichtungen geglättet und stabilisiert werden. In einer weiteren Ausführungsform kann zwischen der Phase L oder den Phasen und dem Nullleiter N ein Varistor geschalten sein.

In einer weiteren Ausführungsform des ersten Ausführungsbeispiels kann nach der Gleichrichterschaltung 1b, an der der Spannungsabfall über den Widerstand R2 zwischen Kondensator C und Nullleiter N anliegt, ein Gleichspannungswandler 2 geschaltet werden (Darstellung in der Fig. 2). Damit ist bei gleicher abgebbarer Leistung ein geringerer Strom durch den Kondensator C als strombegrenzende Einrichtung notwendig. Damit kann ein in seinem Wert kleinerer Kondensator C gegenüber dem ersten Ausrührungsbeispiel eingesetzt werden. Ein derartiger Kondensator C besitzt kleinere Abmessungen, so dass eine wesentlich kleinere Bauform der Stromversorgungseinrichtung realisierbar ist. Für den Gleichspannungswandler 2 sind sowohl Ausführungen mit als auch ohne galvanische Trennung einsetzbar.

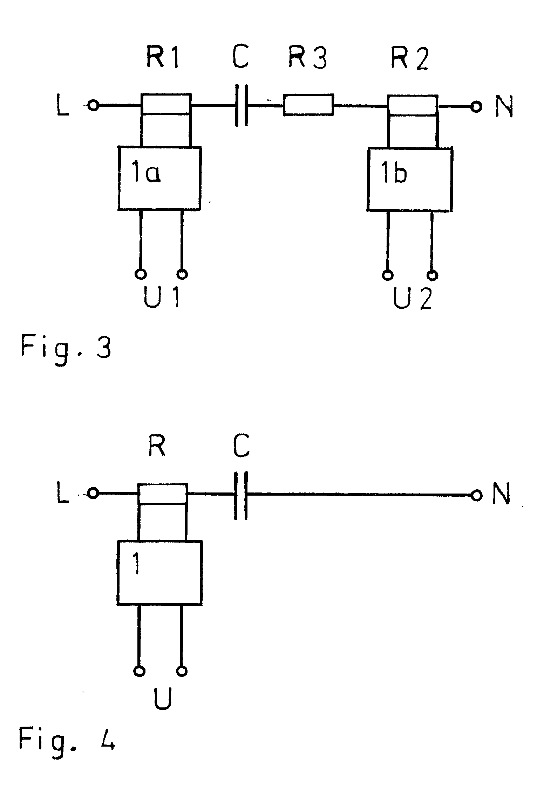

In einer weiteren Ausführungsform des ersten Ausführungsbeispiels kann in Stromrichtung nach dem Kondensator C als strombegrenzende Einrichtung und vor dem elektrischen Widerstand R2 ein Widerstandselement R3 geschalten sein. Dieses Widerstandselement R3 führt dazu, dass die gespeicherte Energie des Kondensators C noch in dieser Periode abgegeben wird, so dass eine stabile Arbeitsweise gegeben ist (Darstellung in der Fig. 3).

### 2. Ausführungsbeispiel

Eine Stromversorgungseinrichtung mit Kleinspannungen für Systeme, z.B. elektronischer Energiezähler, in Einphasennetzen besteht in einem zweiten Ausführungsbeispiel aus einem Kondensator C als strombegrenzende Einrichtung zwischen der Phase L und dem Nullleiter N und einer Gleichrichterschaltung 1 zwischen dem einen Spannungsabfall verursachenden Widerstand R entweder als Zuleitung oder als Widerstandskörper des Kondensators C. In einer Ausführungsform kann eine Stabilisierungsschaltung mit Siebmitteln der Gleichrichterschaltung 1 nachgeschaltet sein. In der Fig. 4 ist eine derartig realisierte Stromversorgungseinrichtung prinzipiell dargestellt.
Der Kondensator C ist gleich dem des ersten Ausführungsbeispiels im Wechselstromkreis ein Widerstandsoperator und damit eine strombegrenzende Einrichtung. In der Leitung zwischen der Phase L und dem Kondensator C wird eine Wirkleistung verrichtet. Dabei fällt in dem Widerstand R als passiver Zweipol eine Spannung ab, da durch diesen passiven Zweipol der Strom im gleichen Zählsinn fließt. Der elektrische Widerstand R besitzt zwei Abgriffe, an denen dieser Spannungabfall anliegt. Diese Spannung wird nachfolgend gleichgerichtet, so dass eine Betriebsspannung U für die Bestandteile des elektronischen Energiezählers vorhanden ist. Die Ausgangsspannung der Gleichrichterschaltung 1 kann in einer Ausführungsform weiterhin über entsprechend ausgebildete Einrichtungen gesiebt und stabilisiert werden.

In weiteren Ausführungsformen des ersten und des zweiten Ausführungsbeispiels können zur Verringerung des räumlichen Abstandes der Abgriffe in der Zuleitung und/oder der Ableitung bei gleichem Spannungabfall elektrische Widerstände in Form von Widerstandskörpern zwischen dem ersten und dem zweiten Abgriff geschalten werden.

### 3. Ausführungsbeispiel

Eine Stromversorgungseinrichtung mit Kleinspannungen für Systeme in Mehrphasennetzen besteht in einem dritten Ausführungsbeispiel aus Kondensatoren C1, C2, C3 als strombegrenzende Einrichtungen zwischen jeweils der Phase L1, L2, L3 und dem Nullleiter N und spannungsbegrenzenden Gleichrichterschaltungen. Erste spannungsbegrenzende Gleichrichterschaltungen sind durch jeweils mindestens eine Diode D zwischen den Phasen L1, L2, L3 und den Kondensatoren C1, C2, C3 gebildet. Zwischen den Dioden D und den Kondensatoren C1, C2, C3 sind Zweiweggleichrichter 1a und nachgeschaltete Stabilisierungsschaltungen mit Siebmitteln 3 geschalten. Zweite spannungsbegrenzende Gleichrichterschaltungen bestehen aus wenigstens einer Diode D Zwischen Nullleiter N und Brückengleichrichtern 1b zu den Kondensatoren C1, C2, C3. Ein System ist dabei z.B. ein elektronischer Energiezähler.
Die Kondensatoren C1, C2, C3 sind im Wechselstromkreis Widerstandsoperatoren, die die fließenden Ströme in den Stromzweigen zwischen Nullleiter N und den Phase L1, L2, L3 begrenzen. In ersten Gleichrichterschaltungen als Brückengleichrichter 1b werden auf Nullleiter N bezogene erste symmetrische Gleichspannungen erzeugt. Diese auf Nullleiter N bezogenen ersten symmetrischen Gleichspannungen sind konjunktiv zu der symmetrischen Gleichspannung U1 verknüpft. Diese können nach Siebung und Stabilisierung der Versorgung einer Steuereinrichtung oder einer Steuer- und Verarbeitungseinrichtung des elektronischen Energiezählers dienen. Damit ist die Stromversorgung der Steuereinrichtung oder der Steuer- und Verarbeitungseinrichtung auch bei Phasenausfall gewährleistet. In Leiterrichtung nach den Kondensatoren C1, C2, C3 befinden sich zweite Gleichrichterschaltungen 1a. Diese sind in diesem Ausführungsbeispiel als Zweiweggleichrichter ausgebildet, die eine auf den jeweiligen Leiter L1, L2, L3 bezogene zweite symmetrische Gleichspannungen bereitstellen. Nach Siebung und Stabilisierung 3 stehen symmetrische Gleichspannungen U2 der Versorgung jeweils einer Messeinrichtung im elektronischen Energiezähler zur Verfügung.
Die Spannungbegrenzung ist durch Zenerdioden D realisiert. Im einfachsten Fall befindet sich wenigstens eine Zenerdiode D zwischen Nullleiter N und den konjunktiv verknüpften ersten Gleichrichterschaltungen 1b.

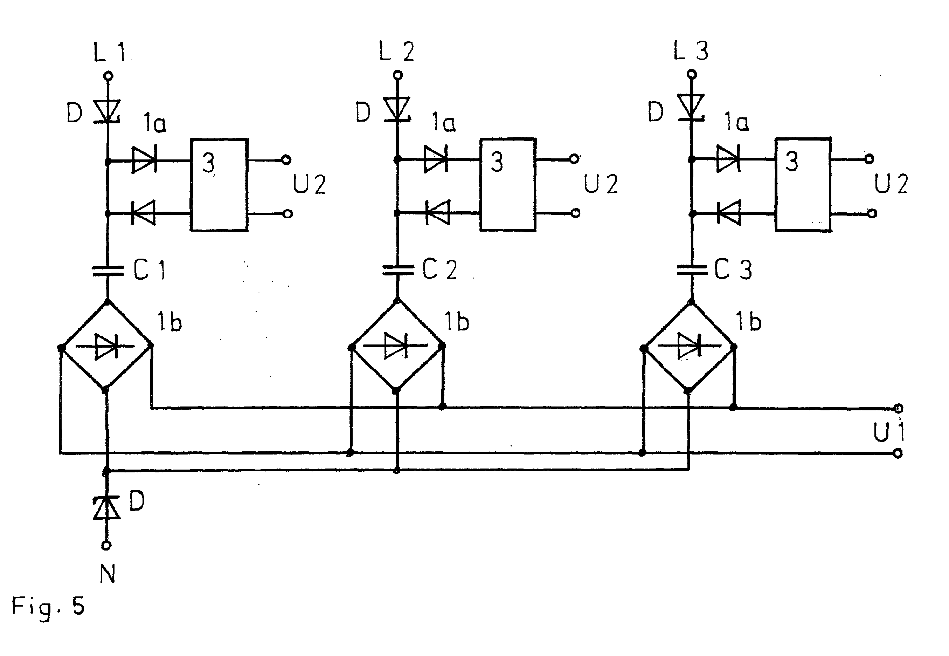

In der Fig. 5 ist eine derartig realisierte Stromversorgungseinrichtung mit Kleinspannungen prinzipiell dargestellt.

Natürlich können auch andere als die in diesem Ausführungsbeispiel aufgeführten Gleichrichterschaltungen eingesetzt werden.

## Patentansprüche

1. Stromversorgungseinrichtung mit Kleinspannungen für Systeme sowohl für den Einsatz in Ein- als auch in Mehrphasennetzen, **dadurch gekennzeichnet, dass** zwischen der Phase L oder jeder der Phasen (L1, L2, L3) und dem Nullleiter (N) eine strombegrenzende Einrichtung und dass in der Leitung oder den Leitungen zwischen Phase (L) und der strombegrenzenden Einrichtung und/oder in der Leitung oder den Leitungen zwischen der strombegrenzenden Einrichtung und Nullleiter (N) ein elektrischer Widerstand (R1, R2) mit zwei Abgriffen und nachgeschalteter Gleichrichterschaltung (1) oder eine spannungsbegrenzende Gleichrichterschaltung geschalten sind.

2. Stromversorgungseinrichtung nach Patentanspruch 1, **dadurch gekennzeichnet, dass** am Ausgang der mindestens einen Gleichrichterschaltung (1) galvanisch getrennt oder galvanisch nicht getrennt ein Gleichspannungswandler (2) geschalten ist.

3. Stromversorgungseinrichtung nach Patentanspruch 1, **dadurch gekennzeichnet, dass** der elektrische Widerstand (R1, R2) ein Bereich der Leitung zwischen Phase (L) und strombegrenzender Einrichtung oder zwischen strombegrenzender Einrichtung und Nullleiter (N) oder dass der elektrische Widerstand (R1, R2) ein Widerstandskörper ist.

4. Stromversorgungseinrichtung nach Patentanspruch 1, **dadurch gekennzeichnet, dass** in Stromrichtung nach der strombegrenzenden Einrichtung und vor dem elektrischen Widerstand ein Widerstandselement geschalten ist.

5. Stromversorgungseinrichtung nach Patentanspruch 1, **dadurch gekennzeichnet, dass** zwischen der Phase (L) oder den Phasen (L1, L2, L3) und dem Nullleiter (N) ein Varistor geschalten ist.

6. Stromversorgungseinrichtung nach Patentanspruch 1, **dadurch gekennzeichnet, dass** nach der Gleichrichterschaltung (1) eine Stabilisierungsschaltung (3) geschalten ist.

7. Stromversorgungseinrichtung nach Patentanspruch 1, **dadurch gekennzeichnet, dass** die strombegrenzende Einrichtung ein Kondensator (C) ist.
